Europäisches Patentamt

European Patent Office

Office européen des brevets

(19)

(11) Numéro de publication : **0 148 651**
**B1**

(12) **FASCICULE DE BREVET EUROPÉEN**

(45) Date de publication du fascicule du brevet :
15.06.88

(51) Int. Cl.⁴ : **H 04 B   1/16, H 04 B   1/40**

(21) Numéro de dépôt : 84401643.6

(22) Date de dépôt : 07.08.84

(54) Poste émetteur-récepteur à faible consommation d'énergie, destiné à une liaison bilatérale.

(30) Priorité : 17.08.83 FR 8313394

(43) Date de publication de la demande :
17.07.85 Bulletin 85/29

(45) Mention de la délivrance du brevet :
15.06.88 Bulletin 88/24

(84) Etats contractants désignés :
CH DE GB IT LI NL

(56) Documents cités :
DE-A- 2 209 134
DE-A- 3 201 538
US-A- 2 912 574
US-A- 3 832 636
PATENTS ABSTRACTS OF JAPAN, vol. 5, no. 181(E-83)(853), 20 novembre 1981 & JP-A-56110357
PATENTS ABSTRACTS OF JAPAN, vol. 5, no. 159(E-77)(831), 14 octobre 1981 & JP-A-5689139
PATENTS ABSTRACTS OF JAPAN, vol. 6, no. 52, 7 avril 1982, page 99E100 & JP-A-56165425

(73) Titulaire : ALCATEL THOMSON FAISCEAUX HERTZIENS
55, rue Greffulhe
F-92300 Levallois-Perret Cédex (FR)

(72) Inventeur : Burztejn, Jacques
THOMSON-CSF SCPI 173, bld Haussmann
F-75379 Paris Cedex 08 (FR)
Inventeur : Babany, Lucien
THOMSON-CSF SCPI 173, bld Haussmann
F-75379 Paris Cedex 08 (FR)

(74) Mandataire : Weinmiller, Jürgen et al
Lennéstrasse 9 Postfach 24
D-8133 Feldafing (DE)

EP 0 148 651 B1

Jouve, 18, rue St-Denis, 75001 Paris, France

## Description

La présente invention se rapporte au domaine des postes émetteurs-récepteurs destinés à des liaisons bilatérales c'est-à-dire sans intermédiaire de gestion tel qu'un standard et qui, pendant des intervalles de temps plus ou moins longs sont en état de veille, c'est-à-dire attendent la réception éventuelle d'un signal et qui, pendant ces veilles, sont alimentés de façon intermittente afin d'économiser de l'énergie ; la présente invention concerne plus particulièrement la commande des moyens permettant d'économiser de l'énergie.

Il est connu d'économiser de l'énergie en alimentant de façon intermittente le poste tant qu'il est en état de veille et il est préférable, pour des raisons technologiques, d'avoir des durées d'alimentation, en état de veille, relativement longues (au moins de l'ordre d'une seconde) et, en conséquence, des durées de « non-alimentation » aussi très longues (de l'ordre de cinq secondes et plus). Ces postes doivent pouvoir s'appeler mutuellement ; il est connu d'utiliser à cet effet la présence d'un signal de modulation dans le signal reçu par le poste appelé, afin de déclencher une sonnerie. Ceci présente des inconvénients au moment où une conversation se termine ; en effet, à moins que les utilisateurs des deux postes en liaison raccrochent simultanément, la sonnerie de celui qui raccroche le premier se déclenche tant que l'autre poste n'a pas raccroché.

La présente invention a pour but d'éviter cet inconvénient en permettant au premier poste qui est raccroché

- de ne pas être rappelé tout de suite, même si le second poste n'est pas raccroché,
- de passer immédiatement en régime d'économie d'énergie,
- d'être en mesure de reprendre la communication au bout d'un temps plus court que les durées de « non-alimentation » si le second poste reste décroché, c'est-à-dire désire continuer l'entretien.

Ceci est obtenu grâce à une commande adéquate de la sonnerie et du dispositif permettant d'économiser de l'énergie.

Le document « Patents Abstracts of Japan », vol 5, n° 181, correspondant au document JP-A-56 110 357 (NIPPON DENSHIN) décrit un système de communication mobile ne validant l'alimentation d'un circuit d'émission-réception que lorsque celui-ci est appelé.

Le document « Patents Abstracts of Japan », vol 5, n° 159 correspondant au document JP-A-56 89 139 (TOKYO SHIBAURA DENKI K. K.) décrit un ensemble radio-téléphonique comportant un bloc émetteur-récepteur, des moyens d'alimentation, un combiné à décrocher pour être mis en service, un circuit à retard ayant pour objet d'interdire la remise en conditions initiales pendant un laps de temps déterminé après que le combiné ait été raccroché.

L'invention, quant à elle, concerne un poste émetteur-récepteur destiné à une liaison bilatérale, comportant un bloc émetteur-récepteur, des moyens d'alimentation pour alimenter le bloc émetteur-récepteur, un combiné à décrocher pour être mis en service, ce combiné comportant une sonnerie et fournissant un signal décroché lorsqu'il est décroché, et un circuit de couplage comportant un circuit de retard pour recevoir le signal décroché, caractérisé en ce qu'il comprend un dispositif économiseur d'énergie comportant un générateur de fréquence pour fournir des impulsions et ce circuit de couplage pour, pendant un état de veille du poste, asservir le fonctionnement des moyens d'alimentation à la durée des impulsions et autoriser un fonctionnement permanent des moyens d'alimentation pendant toute la durée du signal décroché, en ce que le circuit de couplage comprend une porte OU à trois entrées et une porte ET à deux entrées, la première entrée de l'entrée OU étant reliée au générateur de fréquence, la seconde porte recevant le signal décroché, la troisième entrée étant reliée à la sortie de la porte ET et à une entrée permettant de déclencher la sonnerie, la première entrée de cette porte ET, recevant un signal de présence d'une porteuse modulée en entrée du bloc émetteur-récepteur, la seconde entrée étant reliée à la sortie du circuit de retard, la sortie de la porte OU étant reliée à l'entrée de commande des moyens d'alimentation et à un accès d'autorisation de modulation du bloc émetteur-récepteur, de manière à interdire, pendant un laps de temps prédéterminé après la disparition du signal décroché, le fonctionnement de la sonnerie et le fonctionnement permanent des moyens d'alimentation.

La présente invention sera mieux comprise et d'autres caractéristiques apparaîtront à l'aide de la description ci-après et des figures s'y rapportant qui représentent :

- la figure 1, le schéma d'une liaison hertzienne montrant un poste émetteur-récepteur équipé d'un économiseur d'énergie, selon l'invention,
- la figure 2, des signaux utilisés dans des portes selon la figure 1.

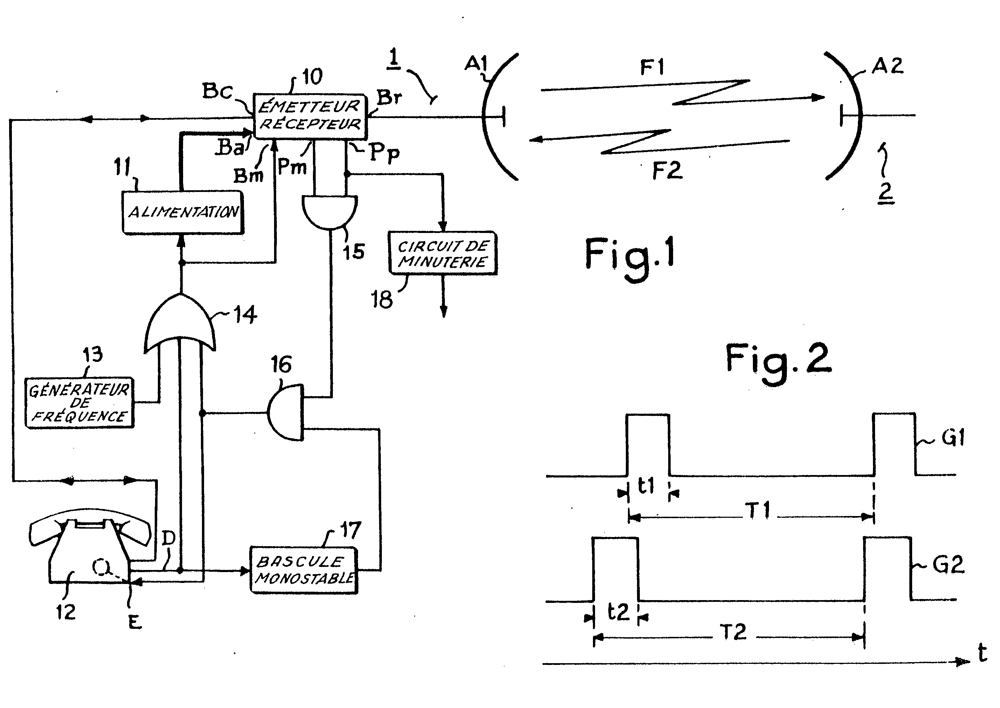

La figure 1 montre deux postes émetteurs-récepteurs, 1, 2, entre lesquels peuvent être échangées des informations par voie hertzienne. Le poste 2, dont seule l'antenne A2 a été représentée, émet sur une fréquence porteuse F2 = 31,185 GHz. Le poste 1 émet sur une fréquence F1 = 31,025 GHz.

Le poste 1 comporte, comme le montre la figure 1, un bloc émetteur-récepteur 10 avec son alimentation 11 et son combiné 12. Le bloc émetteur-récepteur 10 dispose de différents accès simples ou multiples :

- accès Bc connecté au combiné pour l'envoi vers le combiné des informations reçues par le poste et pour la réception, en provenance du combiné, des informations à émettre par le poste,
- accès Ba connecté à l'alimentation pour recevoir les différentes tensions d'alimentation

nécessaires au bon fonctionnement du bloc émetteur-récepteur,

- accès Br connecté à une antenne Al pour l'émission et la réception de signaux par voie hertzienne,

- accès Bm pour recevoir un signal de niveau logique 1 autorisant le fonctionnement du circuit de modulation du bloc émetteur-récepteur 10, et de niveau logique 0 dans le cas contraire,

- accès Pp fournissant un signal de niveau logique 1 lorsque le bloc émetteur-récepteur reçoit de l'antenne A1 un signal à la fréquence F2, c'est-à-dire à la fréquence de la porteuse du poste 2, et de niveau logique 0 dans le cas contraire,

- accès Pm fournissant un signal de niveau logique 1 lorsque le signal reçu, à la fréquence F2, est modulé par de l'information, c'est-à-dire fournissant un signal de niveau logique 1 lorsque la présence de modulation est détectée dans le signal reçu, et fournissant un signal de niveau logique 0 dans le cas contraire.

L'alimentation 11 comporte une entrée de commande arrêt-marche et, selon qu'elle reçoit un signal de niveau logique 1 ou 0 sur cette entrée, fournit ou ne fournit pas de tensions d'alimentation au bloc 10.

Le combiné 12 comporte une sortie pour fournir un signal, D, qui est dit signal décroché et qui a le niveau logique 1 lorsque, dans le combiné, l'ensemble « microphone + écouteur » est décroché du support et peut être utilisé ; le signal D a le niveau logique 0 dans le cas ou l'ensemble « microphone + écouteur » n'est pas décroché. Le combiné 12 comporte également une entrée E pour recevoir un signal d'appel et déclencher une sonnerie interne au support du combiné et figurée par un cercle en traits interrompus sur la figure 1 ; cette sonnerie est arrêtée dès que le combiné est décroché. Dans une utilisation habituelle du bloc émetteur-récepteur 10, l'alimentation 11 est en permanence en fonctionnement c'est-à-dire que les tensions d'alimentation sont fournies en permanence sur l'accès Ba. Pour réduire la consommation d'énergie qui résulte de ce branchement permanent, le poste de la figure 1 comporte un dispositif économiseur d'énergie formé de circuits repérés de 13 à 18.

Le dispositif économiseur est destiné à permettre de n'alimenter le bloc émetteur-récepteur 10 que de façon périodique pendant les veilles c'est-à-dire, dans l'exemple décrit, pendant les intervalles de temps où le combiné 12 n'est pas décroché et où le poste 1 ne reçoit pas d'informations du poste 2. Pendant ces veilles le signal D et le signal de présence de modulation reçue, fourni par l'accès Pm, sont au 0 logique et il faut que, si le poste 2 émet, le poste 1 soit en mesure de passer en fonctionnement permanent.

Pour alimenter le bloc émetteur-récepteur 10 de façon périodique pendant une veille, le dispositif économiseur comporte un générateur de fréquence 13 qui, à travers une porte OU 14, fournit à l'entrée de commande arrêt-marche de l'alimentation 11 un signal G1 dont la courbe représentative en fonction du temps, t, est donnée sur la figure 2. Le signal G1 est formé d'impulsions périodiques de période T1 égale à 6 secondes et de durée $t_1 = 1$ seconde ; en état de veille le fonctionnement de l'alimentation 11 va être limité à la durée des impulsions, c'est-à-dire que le bloc 10 ne sera alimenté que pendant le sixième du temps.

Le signal de sortie de la porte OU 14 est également appliqué sur l'accès d'autorisation de modulation, Bm, du bloc émetteur-récepteur 10.

Lorsque, pendant une veille l'antenne A1 reçoit un signal modulé dont la fréquence porteuse est égale à F2, le bloc émetteur-récepteur 10, dès qu'il est alimenté, c'est-à-dire dès que commence une durée t1 (figure 2), détecte ce signal modulé; les signaux des accès Pp et Pm sont donc à la valeur 1 logique puisque la partie réceptrice du bloc 10 a reconnu une porteuse et que cette porteuse est modulée. Une porte ET, 15, ayant deux entrées respectivement connectées aux accès Pp et Pm, a donc sa sortie qui passe alors de 0 à 1 logique. Ce signal 1 logique est appliqué sur la première entrée d'une porte ET 16, dont la seconde entrée reçoit d'une bascule monostable 17 un 1 logique. Le signal de niveau 1 logique, de la sortie de la porte ET 16, traverse la porte OU 14 pour mettre l'alimentation 11 en fonctionnement permanent et autoriser (accès Bm) le fonctionnement permanent du circuit de modulation du bloc émetteur-récepteur 10. Le signal de niveau 1, sur la sortie de la porte ET 16, sert également de signal d'appel et est, pour cela, envoyé sur l'entrée E du combiné pour déclencher la sonnerie du combiné. La bascule monostable 17 reçoit le signal D et fournit à la porte ET, 16, un signal 0 logique, d'une durée de 3 secondes, lorsque le signal D passe du niveau 1 logique au niveau 0 logique ; elle interdit ainsi le fonctionnement de la sonnerie du combiné dans les 3 secondes qui suivent l'instant où le combiné est raccroché.

Si, entendant la sonnerie du combiné 12, un utilisateur du poste 1 décroche le combiné, une conversation peut s'établir entre l'utilisateur appelant du poste 2 et l'utilisateur appelé du poste 1. Pendant toute cette conversation le signal décroché, D, est au niveau 1 logique. Tant que le combiné du poste 1 est décroché le signal D, qui est au niveau 1 et qui est appliqué à l'une des entrées de la porte OU 14, maintient un fonctionnement permanent de l'alimentation et de la modulation du poste 1.

Lorsqu'une conversation cesse entre les postes 1 et 2 le dispositif économiseur d'énergie est prévu pour ne faire recommencer l'alimentation périodique du bloc émetteur-récepteur 10 que lorsque les deux correspondants ont raccroché, quel que soit l'ordre dans lequel ils raccrochent, du moins dans la mesure où le correspondant du poste 2 ne raccroche pas plus de trois secondes après celui du poste 1. C'est la bascule monostable 17 qui permet un tel fonctionnement ; en effet la bascule 17 est déclenchée par le passage de 1 à 0 logique de son signal d'entrée et fournit sur sa sortie, à partir de cet instant, une impulsion de niveau 0 logique et d'une durée de 3 secondes.

Ainsi, ou bien l'utilisateur du poste 1 raccroche le dernier et c'est le passage au niveau 0 du signal D qui amènera une alimentation intermittente du bloc émetteur-récepteur 10, ou bien l'utilisateur du poste 1 raccroche le premier et, si l'utilisateur du poste 2 raccroche dans les 3 secondes qui suivent, c'est le passage au niveau 0 du signal de sortie de la porte ET 16 qui déclenche le début d'un fonctionnement intermittent de l'alimentation 11. Si l'utilisateur du poste 2 ne raccroche pas dans les 3 secondes qui suivent l'instant où le combiné du poste 1 a été raccroché, les signaux sur les accès Pm et Pp du bloc émetteur-récepteur 10 restent au niveau logique 1 puisqu'un signal modulé continue à être reçu ; ainsi la porte ET 16 fournit à nouveau un signal de niveau 1 dès la fin de l'impulsion de sortie de la bascule 17 si bien que la sonnerie d'appel du combiné 12 retentit au bout de trois secondes ; une conversation normale peut alors reprendre entre les utilisateurs des postes 1 et 2 en supposant que, si l'utilisateur du poste 2 n'avait pas raccroché, c'est qu'il voulait encore s'entretenir avec celui du poste 1 et non pas qu'il avait oublié de raccrocher.

Le poste 1 comporte également un circuit de minuterie, 18, qui reçoit le signal de présence de porteuse reçue, de l'accès Pp du bloc émetteur-récepteur 10 et fournit un signal d'alarme si le signal de présence de porteuse reçue disparaît et ne réapparaît pas dans un intervalle de temps prédéterminé qui sera défini plus loin. L'apparition de ce signal d'alarme est considéré comme un signal représentatif d'une panne qui empêche le poste 2 d'émettre ou le poste 1 de recevoir ; ce signal qui prévient qu'un défaut est apparu dans la liaison, permet donc également d'économiser de l'énergie puisqu'il signale que, tant que la panne n'est pas réparée l'alimentation du bloc 10 se fait en pure perte ; dans l'exemple décrit ce signal sert à allumer un voyant « PANNE », non représenté, qui attire l'attention sur la nécessité d'une réparation.

Le poste 1, tel qu'il vient d'être décrit, peut fonctionner en liaison duplex avec un poste 2 de type classique c'est-à-dire, qui possède, par exemple la même antenne, le même bloc émetteur-récepteur et le même combiné que le poste 1 mais qui ne comporte pas le dispositif économiseur d'énergie et dont l'alimentation fonctionne en permanence.

Le poste 1 peut également fonctionner en liaison duplex avec un poste 2 réalisé selon le même schéma que le poste 1. Dans ce cas, qui est d'ailleurs celui de l'exemple, afin d'éviter que le circuit de minuterie (18, dans le poste 1) ne produise un signal d'alarme pendant une veille des deux postes il faut que les périodicités des générateurs de fréquence (13, dans le poste 1) ne soient pas les mêmes ; le générateur de fréquence qui détermine le fonctionnement intermittent de l'alimentation du poste 2 a, à cet effet, été choisi avec un signal G2 dont la courbe représentative en fonction du temps, t, est donnée sur la figure 2 ; le signal G2 est un signal rectangulaire d'une période T2 égale à 6,6 secondes et qui, par période, reste au niveau logique 1 pendant une durée t2 = 1,1 seconde et au niveau logique 0 pendant une durée T2 — t2 = 5,5 secondes.

Vu la période des signaux G1 et G2 et les durées t1 et t2 (voir figure 2) les instants où les alimentations des deux postes fonctionnent simultanément se produisent avec une périodicité de 66 secondes. Pour vérifier le bon fonctionnement de la liaison entre les postes 1 et 2 il suffit donc que le circuit de minuterie 18 de la figure 1 ait une durée de 66 secondes, de même que le circuit de minuterie correspondant, non représenté, du poste 2 ; dans l'exemple décrit une marge de sécurité a été prise pour le cas où un fonctionnement défectueux, mais de très courte durée, aurait lieu et, à cette fin, une durée de 3 minutes a été choisie pour la minuterie de chacun des deux postes.

La présente invention n'est pas limitée à l'exemple décrit, elle s'applique à tout type d'alimentation intermittente d'un émetteur-récepteur qui doit rester en état de veille pendant des intervalles de temps plus ou moins longs.

L'invention s'applique également au cas d'un groupement d'abonnés, c'est-à-dire d'un poste multiple, relié, grâce à un multiplexeur-démultiplexeur, via un faisceau hertzien ou un câble, à un autre groupement d'abonnés ou à un standard. Le principe de fonctionnement reste le même que dans le cas décrit à l'aide de la figure 1 ; il suffit, pour l'homme de l'art, d'adapter le multiplexeur-démultiplexeur à la place du combiné 12 de la figure 1 et pour cela l'état raccroché correspondra, pour un groupement, aux moments où aucun des abonnés du groupement est en ligne, tandis que l'état décroché correspondra aux moments où au moins un des abonnés du groupement est en ligne.

**Revendications**

1. Poste émetteur-récepteur destiné à une liaison bilatérale, comportant un bloc émetteur-récepteur (10), des moyens d'alimentation (11) pour alimenter le bloc émetteur-récepteur, un combiné (12) à décrocher pour être mis en service, ce combiné comportant une sonnerie et fournissant un signal décroché (D) lorsqu'il est décroché, et un circuit de couplage comportant un circuit de retard (17) pour recevoir le signal décroché (D), caractérisé en ce qu'il comprend un dispositif économiseur d'énergie (13 à 18) comportant un générateur de fréquence (13) pour fournir des impulsions et ce circuit de couplage (14-17) pour, pendant un état de veille du poste, asservir le fonctionnement des moyens d'alimentation à la durée des impulsions et autoriser un fonctionnement permanent des moyens d'alimentation pendant toute la durée du signal décroché, en ce que le circuit de couplage comprend une porte OU (14) à trois entrées et une porte ET (16) à deux entrées, la première entrée de la porte OU (14) étant reliée au générateur de fréquence (13), la seconde entrée recevant le signal décroché (D), la troisième entrée étant reliée à la sortie de la porte ET (16) et à une entrée (E) permettant de déclencher la sonnerie, la première entrée de cette porte ET (16), recevant, un signal de présence d'une porteuse modulée en entrée du bloc émetteur-récepteur (10), la seconde entrée étant reliée à la sortie du circuit de retard (17), la sortie de la porte OU (14) étant reliée à l'entrée de commande des moyens d'alimentation (11) et à un accès d'autorisation de modulation (Bm) du bloc émetteur-récepteur (10), de manière à interdire, pendant un laps de temps prédéterminé après la disparition du signal décroché, le fonctionnement de la sonnerie et le fonctionnement permanent des moyens d'alimentation.

2. Poste selon la revendication 1, caractérisé en ce que le signal délivré par le générateur de fréquence (13) est formé d'impulsions périodiques de période égale à 6 secondes et de durée 1 seconde, et en ce que le circuit à retard (17) a un retard de l'ordre de trois secondes.

3. Poste selon l'une des revendications précédentes, caractérisé en ce que le dispositif économiseur d'énergie comporte un détecteur de panne (18) pour signaler une anomalie dans une liaison à laquelle participe le poste, ce détecteur ayant une entrée pour recevoir du bloc récepteur (10) un signal significatif de la réception d'une porteuse par le poste et une sortie pour fournir un signal de panne lorsque le signal sur son entrée disparaît pendant une durée supérieure à une durée prédéterminée.

## Claims

1. A transmitter-receiver station for a two-way link, comprising a transmitter-receiver unit (10), means (11) for supplying power to the transmitter-receiver unit, a hand-set (12) to be lifted from its cradle in order to be put into service, this hand-set comprising a ringer and supplying a « liftedhand-set » signal (D) when said hand-set is lifted from its cradle, and a coupling circuit including a delay circuit (17) intended to receive the « lifted-hand-set » signal (D), characterized in that it comprises a power saving device (13 to 18) including a frequency generator (13) for producing pulses, and said coupling circuit (14 to 17) for controlling, during a stand-by state of the station, the operation of the power supply means in dependence on the duration of the pulses, and for permitting a continuous operation of the power supply means throughout the duration of the « lifted-hand-set » signal, that the coupling circuit comprises an OR gate (14) with three inputs and an AND gate (16) with two inputs, the first input of the OR gate (14) being connected to the frequency generator (13), the second input receiving the « lifted-hand-set » signal (D), the third input being connected to the output of the AND gate (16) and to an input (E) allowing to activate the ringer, the first input of this AND gate (16) receiving a signal signifying the presence of a modulated carrier at the input of the transmitter-receiver unit (10), the second input being connected to the output of the delay circuit (17), the output of the OR gate (14) being connected to the control input of the power supply means (11) and to a terminal (Bm) for enabling the modulation of the transmitter-receiver unit (10) such that, during a predetermined time lapse following the disappearance of the « lifted-hand-set » signal, the operation of the ringer and the continuous operation of the power supply means are disabled.

2. A station according to claim 1, characterized in that the signal supplied by the frequency generator (13) is constituted by periodical pulses having a period equal to 6 seconds and a duration of 1 second, and that the delay circuit (17) implements a delay of about 3 seconds.

3. A station according to one of the preceding claims, characterized in that the power saving device comprises a fault detector (18) for indicating an abnormal condition in a link in which the station takes part, said detector being provided with an input for receiving from the receiver unit (10) a signal indicating reception of a carrier by the station, and with an output for delivering a fault signal when the signal on its input disappears during a time interval which exceeds a predetermined value.

## Patentansprüche

1. Sende-Empfangsgerät für eine bilaterale Verbindung, mit einem Sende-Empfangsblock (10), Stromversorgungsmitteln (11) zur Versorgung des Sende-Empfangsblocks, einen Hörer (12), der durch Abheben in Betrieb gesetzt wird, ein Läutewerk besitzt und ein Signal (D) liefert, wenn der Hörer abgehoben ist, und mit einem Koppelkreis, der einen Verzögerungskreis (17) zum Empfang des beim Abheben des Hörers auftretenden Signals (D) besitzt, dadurch gekennzeichnet, daß das Gerät eine Energiesparvorrichtung (13 bis 18) mit einem Frequenzgenerator (13) zur Lieferung von Impulsen und mit dem Koppelkreis (14 bis 17) aufweist, um während eines Bereitschaftszustands des Geräts den Betrieb der Versorgungsmittel abhängig von der Impulsdauer zu regeln und einen permanenten Betrieb der Versorgungsmittel während der ganzen Zeit zuzulassen, in der das Signal vorliegt, das einen abgehobenen Hörer anzeigt, und daß der Koppelkreis ein ODER-Tor (14) mit drei Eingängen und ein UND-Tor (16) mit zwei Eingängen aufweist, wobei der erste Eingang des ODER-Tors (14) an den Frequenzgenerator (13) angeschlossen ist, der zweite Eingang das Signal (D) empfängt, das anzeigt, daß der Hörer abgehoben ist, während der dritte Eingang an den Ausgang des UND-Tors (16) und an einen Eingang (E) angeschlossen ist, über den die Klingel ausgelöst werden kann, wobei der erste Eingang des UND-Tors (16) ein Signal empfängt, das das Vorliegen eines modulierten Trägers am Eingang des Sende-Empfangsblocks (10) anzeigt, während der zweite Eingang an den Ausgang des Verzögerungskreises (17) und der Ausgang des ODER-Tors (14) an den Steuereingang der Versorgungsmittel (11) und an einen Modulationsfreigabeanschluß (Bm) des Sende-Empfangsblocks (10) angeschlossen ist, so daß während einer vorgegebenen Zeitdauer nach dem Verschwinden des Signals, das den abgehobenen Hörer anzeigt, der Betrieb der Klingel und der permanente Betrieb der Versorgungsmittel unterbunden wird.

2. Gerät nach Anspruch 1, dadurch gekennzeichnet, daß das vom Frequenzgenerator (13) gelieferte Signal aus periodischen Impulsen einer Periode von sechs Sekunden und einer Dauer von einer Sekunde besteht und daß der Verzögerungskreis (17) eine Verzögerung in der Größenordnung von drei Sekunden aufweist.

3. Gerät nach einem der vorhergehenden Ansprüche, dadurch gekennzeichnet, daß die Energiesparvorrichtung einen Störfalldetektor (18) enthält, der eine Unregelmäßigkeit in einer Verbindung anzeigt, an der das Gerät beteiligt ist, wobei ein Eingang dieses Detektors vom Empfangsblock (10) ein Signal empfängt, das für den Empfang eines Trägers durch das Gerät kennzeichnend ist, und ein Ausgang des Detektors ein Störfallsignal liefert, wenn das Signal an seinem Eingang während einer Dauer verschwindet, die eine vorgegebene Dauer überschreitet.

Fig.1

Fig.2

0 148 651